# EUROPÄISCHE PATENTSCHRIFT

(11) **EP 1 691 215 B1**
(45) Veröffentlichungstag und Bekanntmachung des Hinweises auf die Patenterteilung: **28.11.2012**
(21) Anmeldenummer: 05101134.4
(22) Anmeldetag: 15.02.2005
(51) Int. Cl.: G01T 1/29

(54) **Auslesevorrichtung und Verfahren zum Auslesen von in Speicherleuchtstoffschichten gespeicherten Röntgenaufnahmen**
Method and device for reading X-Ray exposures stored in storage phosphor layers
Procédé et appareil pour lire des vues radiographiques enregistrées dans des écrans luminescents

(43) Veröffentlichungstag der Anmeldung: 16.08.2006
(73) Patentinhaber: Agfa-Gevaert HealthCare GmbH, 50670 Köln (DE)
(72) Erfinder: Fasbender, Dr. Robert, 91054 Erlangen (DE); Frankenberger, Dr. Jörg, 85570 Markt Schwaben (DE); Herrmann, Dr. Clemens, 22299 Hamburg (DE); Mair, Dr. Stephan, 86157 Augsburg (DE); Scherer, Dr. Horst, 82008 Unterhaching (DE); Lamotte, Johann, 3110 Rotselaar (BE)

(56) Entgegenhaltungen:
- EP-A- 1 376 615
- US-A- 5 038 037
- US-A- 5 376 806

## Beschreibung

Die Erfindung betrifft eine Auslesevorrichtung sowie ein entsprechendes Verfahren zum Auslesen von in Speicherleuchtstoffschichten gespeicherten Röntgenaufnahmen gemäß dem Oberbegriff von Anspruch 1 bzw. 6.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Bei gattungsgemäßen Auslesevorrichtungen nach dem Stand der Technik wird nicht in allen Anwendungsfällen die für eine zuverlässige medizinische Diagnose erforderliche oder vorgeschriebene Bildqualität der ausgelesenen Röntgenaufnahme erreicht.

Aus US 5,038,037 ist eine Vorrichtung bekannt, bei welcher die durch einen Patienten hindurch tretende Röntgenstrahlung in zwei hintereinander angeordneten, an beiden Seiten eines flexiblen Bandes befindlichen Speicherleuchtstoffschichten gespeichert wird. Das flexible Band wandelt die Strahlungsenergie der Röntgenstrahlung um, so dass in einer der Speicherleuchtstoffschichten ein Röntgenbild mit weicher Röntgenstrahlung und in der anderen Speicherleuchtstoffschicht ein Röntgenbild ohne weiche Röntgenstrahlung aufgezeichnet wird. Die in den beiden Speicherleuchtstoffschichten, die unterschiedliche Dicken haben können, gespeicherten Röntgeninformationen werden von zwei separaten Auslese- und Löscheinheiten ausgelesen bzw. gelöscht, die mit unterschiedlichen Geschwindigkeiten bewegt werden können.

Es ist Aufgabe der Erfindung, eine Auslesevorrichtung und ein entsprechendes Verfahren anzugeben, bei welchen eine möglichst hohe Bildqualität der ausgelesenen Röntgenaufnahme erreicht wird.

Diese Aufgabe wird durch die Auslesevorrichtung gemäß Anspruch 1 und das entsprechende Verfahren gemäß Anspruch 6 gelöst.

Erfindungsgemäß ist eine Auslesesteuerung vorgesehen, welche die Auslesevorrichtung in der Weise steuert, dass eine erste Speicherleuchtstoffschicht, die eine erste Dicke aufweist, von der in einem ersten Auslesemodus gesteuerten Auslesevorrichtung ausgelesen wird und eine zweite Speicherleuchtstoffschicht, die eine zweite Dicke aufweist, die größer ist als die erste Dicke, von der in einem zweiten Auslesemodus gesteuerten Auslesevorrichtung ausgelesen wird, wobei der zweite Auslesemodus von dem ersten Auslesemodus verschieden ist.

Die Erfindung basiert auf dem Gedanken, die Auslesevorrichtung in Abhängigkeit von der Dicke der jeweils auszulesenden Speicherleuchtstoffschicht zu steuern. Dies wird dadurch erreicht, dass zumindest ein Teil der beim Auslesen der Speicherleuchtstoffschicht eingestellten Scanparameter der Auslesevorrichtung in Abhängigkeit von der Dicke der jeweils auszulesenden Speicherleuchtstoffschicht eingestellt wird. Bei den Scanparametem handelt es sich vorzugsweise um
- die Größe der Bildpunkte des ausgelesenen Röntgenbildes,
- die Pulsdauer und/oder Intensität des Stimulationslichts,
- die Breite des Fokusbereichs des Stimulationslichts auf der Speicherleuchtstoffschicht,
- die Integrationsdauer bzw. Samplingrate des Detektors, und
- die Vorschubdauer des Detektors bzw. die Relativgeschwindigkeit, mit welcher die Auslesevorrichtung und die Speicherleuchtstoffschicht während des Auslesens relativ zueinander bewegt werden.

Die im ersten Auslesemodus eingestellten Scanparameter unterscheiden sich erfindungsgemäß von den im zweiten Auslesemodus eingestellten Scanparametem in mindestens einem Scanparameter. Dies bedeutet, dass zumindest ein Scanparameter im ersten Auslesemodus einen anderen Wert aufweist als im zweiten Auslesemodus.

Durch die erfindungsgemäße Steuerung der Scanparameter der Auslesevorrichtung in Abhängigkeit von der Dicke der auszulesenden Speicherleuchtstoffschicht wird eine verbesserte Anpassung sowohl der Auslesebedingungen als auch der Dicke der Speicherleuchtstoffschicht an die jeweilige medizinische Anwendung, die auch Applikation genannt wird, ermöglicht. Auf diese Weise kann für unterschiedliche Applikationen eine jeweils optimale Bildqualität erzielt werden. Unterschiedliche Applikationen sind z.B. Röntgenaufnahmen von Extremitäten, des Schädels, der Wirbelsäule, des Thorax, des Abdomens oder des Beckens.

Die Auslesevorrichtung kann beim Auslesen einer Speicherleuchtstoffschicht ein aus einer Vielzahl von Bildpunkten, die auch als Pixel bezeichnet werden, zusammengesetztes Bild erzeugen, wobei die Größe der erzeugten Bildpunkte im ersten Auslesemodus kleiner ist als im zweiten Auslesemodus. Hierdurch wird die Auflösung des erhaltenen Bildes erhöht und die Bildqualität weiter verbessert.

Die Auslesevorrichtung weist eine Bestrahlungseinrichtung zur Bestrahlung einer Speicherleuchtstoffschicht mit Stimulationslicht auf, welches die Speicherleuchtstoffschicht zur Aussendung von Emissionslicht anregen kann. Außerdem umfasst die Auslesevorrichtung einen Detektor zur Erfassung von in der Speicherleuchtstoffschicht angeregtem Emissionslicht, wobei der Detektor und die Speicherleuchtstoffschicht relativ zueinander bewegt werden können.

Die Bestrahlungseinrichtung wird durch die Auslesesteuerung derart gesteuert, dass die Bestrahlungseinrichtung Stimulationslichtpulse mit einer bestimmten Pulsdauer aussendet, wobei die Pulsdauer der Stimulationslichtpulse im ersten Auslesemodus kürzer ist als im zweiten Auslesemodus. Auf diese Weise wird bei jedem Auslesen eines Bildpunktes, insbesondere einer Zeile von Bildpunkten, im ersten Auslesemodus ein kleinerer Teilbereich der Speicherleuchtstoffschicht von dem Stimulationslicht überstrichen als im zweiten Auslesemodus. Entsprechend kleiner sind die angeregten Teilbereiche der Speicherleuchtstoffschicht. Die Größe der angeregten Teilbereiche kann somit an die erforderliche Größe der Bildpunkte angepasst werden.

Es ist außerdem vorgesehen, die Bestrahlungseinrichtung durch die Auslesesteuerung derart zu steuern, dass die Intensität des Stimulationslichts im ersten Auslesemodus kleiner ist als die Intensität des Stimulationslichts im zweiten Auslesemodus. Hierdurch wird im ersten Auslesemodus eine Streuung des Stimulationslichts innerhalb der Speicherleuchtstoffschicht im Vergleich zum zweiten Auslesemodus vermindert, so dass eine höhere Bildschärfe erzielt wird. Dies gilt insbesondere für sog. Powder Image Plates (PIP). Bei solchen PIP werden die Speicherleuchtstoffpartikel, die eine im Wesentlichen isotrope Form aufweisen, in Pulverform mit einem Bindemittel vermischt und zu einer Schicht verarbeitet. Darüber hinaus ist eine Fokussiereinrichtung zur Fokussierung des Stimulationslichts auf die Speicherleuchtstoffschicht vorgesehen, wobei das Stimulationslicht in einem, insbesondere linienförmigen, Fokusbereich auf die Speicherleuchtstoffschicht trifft und die Breite des Fokusbereichs im ersten Auslesemodus kleiner ist als im zweiten Auslesemodus. Auf diese Weise wird bei jedem Auslesen einzelner Bildpunkte, insbesondere einer ganzen Zeile von Bildpunkten, im ersten Auslesemodus ein kleinerer Teilbereich der Speicherleuchtstoffschicht von dem Stimulationslicht überstrichen als im zweiten Auslesemodus. Auch hierdurch wird die Bildschärfe erhöht.

Außerdem wird der Detektor durch die Auslesesteuerung derart gesteuert, dass das Emissionslicht in einer Vielzahl von Zeitintervallen während der Relativbewegung erfasst wird, wobei die Zeitintervalle im ersten Auslesemodus kürzer sind als im zweiten Auslesemodus.

Im Fall eines Zeilendetektors, der eine Vielzahl von in einer Zeile angeordneten, lichtempfindlichen Elementen aufweist, handelt es sich bei den Zeitintervallen um die sog. Integrationsdauer, innerhalb welcher die lichtempfindlichen Elemente Licht erfassen und in entsprechende elektrische Signale umwandeln. Im Fall eines nicht ortsauflösenden Detektors, wie z.B. eines Photomultipliers, handelt es sich bei den Zeitintervallen um die Abtastdauer, innerhalb welcher das von dem Detektor erzeugte analoge Signal abgetastet wird. Die Abtastdauer ist der reziproke Wert der sog. Abtastfrequenz, die auch als Samplingrate bezeichnet wird.

Insgesamt wird hierdurch im ersten Auslesemodus eine hohe Auflösung bei gleichzeitig verminderten Rauschanteilen und verminderter Bewegungsunschärfe, welche von der Relativbewegung von Detektor und Speicherleuchtstoffschicht herrührt, erreicht und damit die Bildqualität weiter verbessert.

Vorzugsweise werden Detektor und Speicherleuchtstoffschicht mit einer Relativgeschwindigkeit relativ zueinander bewegt, wobei die Relativgeschwindigkeit im ersten Auslesemodus kleiner ist als im zweiten Auslesemodus. Auch hierdurch wird die Bewegungsunschärfe vermindert und gleichzeitig das Signal/Rausch-Verhältnis der erhaltenen Bilddaten verbessert.

Es ist bevorzugt, dass die erste Dicke der ersten Speicherleuchtstoffschicht zwischen 100und 750 µm liegt. Bei Speicherleuchtstoffschichten in diesem Dickenbereich wird die Bildschärfe durch Streuung von Stimulationslicht in der Schicht nur relativ geringfügig beeinträchtigt, gleichzeitig aber eine ausreichend hohe Intensität des von der Speicherleuchtstoffschicht ausgesandten Emissionslichts erreicht. Dies wirkt sich insbesondere bei solchen Applikationen positiv auf die Bildqualität aus, bei welchen die Bildschärfe im Vordergrund steht.

Die zweite Dicke der zweiten Speicherleuchtstoffschicht liegt vorzugsweise zwischen 750 und 1000 µm. Mit Speicherleuchtstoffschichten in diesem Dickenbereich können in Anwendungsfällen, in welchen auf eine besonders hohe Bildschärfe verzichtet werden kann, Bilddaten mit einem besonders günstigen Signal/Rausch-Verhältnis und Kontrast erhalten werden.

Vorzugsweise weist die eingesetzte erste und/oder zweite Speicherleuchtstoffschicht nadelförmige Speicherleuchtstoffstrukturen auf. Solche Speicherleuchtstoffschichten werden auch als Needle Image Plates (NIP) bezeichnet und liefern Bilddaten mit hervorragendem Signal/Rausch-Verhältnis und hoher Bildschärfe.

Weitere bevorzugte Ausführungsformen der Erfindung werden nachfolgend anhand von in Figuren dargestellten Beispielen näher erläutert. Es zeigen:
Fig. 1 eine erste Variante einer Auslesevorrichtung;
Fig. 2 ein Beispiel für eine auszulesende Speicherleuchtstoffschicht;
Fig. 3 eine zweite Variante einer Auslesevorrichtung; und
Fig. 4 ein Beispiel für ein Radiographiesystem.

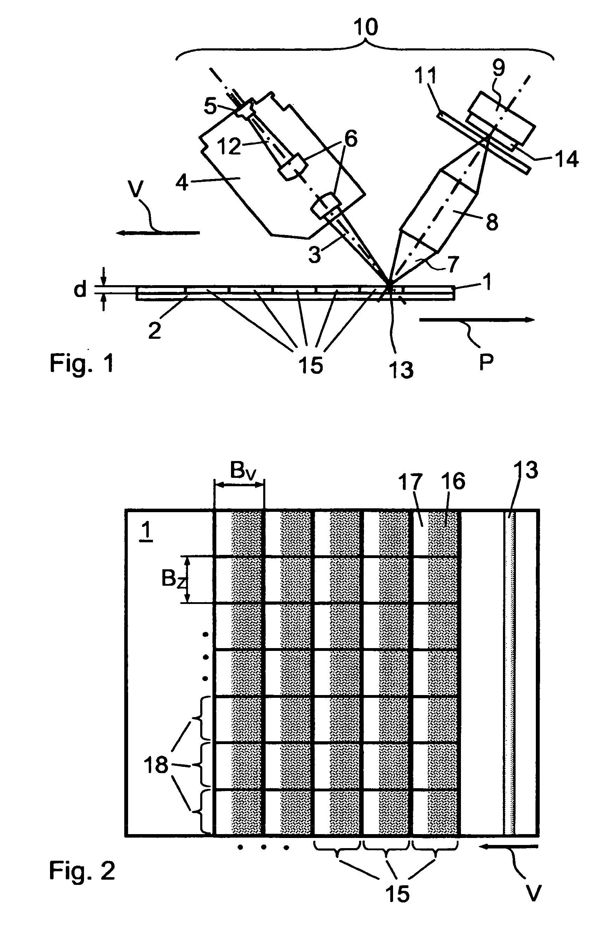

Figur 1 zeigt eine erste Variante einer Auslesevorrichtung, die im Folgenden auch als Scanner bezeichnet wird. Eine auszulesende Speicherleuchtstoffschicht 1, die eine Dicke d aufweist, befindet sich auf einer Trägerschicht 2 und wird mit Stimulationslicht 3 bestrahlt, welches von einer Lichtquelle 4 erzeugt wird. Das durch das Stimulationslicht 3 in der Speicherleuchtstoffschicht 1 angeregte Emissionslicht 7 wird mit einem Detektor 9 erfasst. Die Lichtquelle 4 und der Detektor 9, einschließlich einer Abbildungseinrichtung 8 und eines optischen Filters 11, bilden zusammen den Scanner 10, welcher während des Auslesens in Vorschubrichtung V relativ zur Speicherleuchtstoffschicht 1 bewegt wird.

Die Lichtquelle 4 weist mehrere einzelne Strahlungsquellen 5 sowie eine Fokussiereinrichtung 6 auf, welche die von den Strahlungsquellen 5 ausgehenden Stimulationslichtbündel 12 auf die Speicherleuchtstoffschicht 1 fokussieren. Die einzelnen Strahlungsquellen 5, beispielsweise Leuchtdioden oder Laserdioden, sind in einer senkrecht zur Figurenebene verlaufenden Zeile angeordnet.

Die Fokussiereinrichtung 6 weist zwei längliche Zylinderlinsen auf, welche im Wesentlichen parallel zu den in einer Zeile angeordneten einzelnen Strahlungsquellen 5 verlaufen. Die von den einzelnen Strahlungsquellen 5 ausgehenden divergenten Stimulationslichtbündel 12 werden durch die Fokussiereinrichtung 6 in Figurenebene gebündelt und treffen als konvergentes Strahlungsbündel des Stimulationslichts 3 auf die Speicherleuchtstoffschicht 1. Senkrecht zur Figurenebene überlagern sich die divergenten Stimulationslichtbündel 12 der einzelnen Strahlungsquellen 5 in der Weise, dass das konvergente Strahlungsbündel eine senkrecht zur Figurenebene verlaufende, kontinuierliche Stimulationslichtlinie 13 auf der Speicherleuchtstoffschicht 1 beschreibt.

Das im Bereich der Stimulationslichtlinie 13 in der Speicherleuchtstoffschicht 1 angeregte und abgestrahlte Emissionslicht 7 wird mit einem Detektor 9 ortsaufgelöst erfasst. Hierzu weist der Detektor 9 eine Vielzahl von lichtempfindlichen Detektorelementen 14 auf, welche entlang einer senkrecht zur Figurenebene verlaufenden Linie angeordnet sind. Das im Bereich der Stimulationslichtlinie 13 auf der Speicherleuchtstoffschicht 1 emittierte Emissionslicht 7 wird mittels einer Abbildungseinrichtung 8 auf die lichtempfindlichen Detektorelemente 14 des Detektors 9 abgebildet. Der Detektor 9 ist vorzugsweise als CCD- oder Photodiodenzeile ausgebildet.

Als Abbildungseinrichtung 8 eignen sich vorzugsweise Mikrolinsen, welche entlang einer senkrecht zur Figurenebene - und damit parallel zum zeilenförmig ausgebildeten Detektor 9 - verlaufenden Linie angeordnet sind. Alternativ eignen sich hierzu auch Gradientenindex-Linsen, insbesondere selbstfokussierende Linsen, welche ebenfalls in einer senkrecht zur Figurenebene verlaufenden Zeile angeordnet sind. Vorzugsweise werden die einzelnen Bereiche 15 durch die Abbildungseinrichtung 8 im Maßstab 1:1 auf die lichtempfindlichen Flächen 14 des Detektors 9 abgebildet.

Im gezeigten Beispiel wird der Scanner 10 mit einem nicht dargestellten Transportmechanismus in Vorschubrichtung V über die ruhende Speicherleuchtstoffschicht 1 bewegt, wobei durch die Stimulationslichtlinie 13 unterschiedliche zeilenförmige Bereiche 15 der Speicherleuchtstoffschicht 1 sukzessive angeregt werden und das jeweils ausgesandte Emissionslicht 7 von den lichtempfindlichen Detektorelementen 14 des Detektors 9 ortsaufgelöst erfasst wird.

Vorzugsweise ist die Lichtquelle 4 bezüglich der Vorschubrichtung V vor dem Detektor 9 angeordnet, d.h. der Scanner 10 läuft mit der Lichtquelle 4 voraus über die Speicherleuchtstoffschicht 1. Hierdurch wird erreicht, dass ein größerer Anteil des in der Speicherleuchtstoffschicht gestreuten Stimulationslichts 3 in Richtung bereits ausgelesener Bereiche 15 gestreut wird, während nur ein kleinerer Anteil des Stimulationslichts 3 in Richtung noch nicht ausgelesener Bereiche 15 der Speicherleuchtstoffschicht 1 gestreut wird. Dadurch können Intensitäts- und Schärfeverluste aufgrund einer Streuung von Stimulationslicht 3 innerhalb der Speicherleuchtstoffschicht 1 vermindert werden.

Im dargestellten Beispiel wird der Scanner 10 über eine ortsfeste Speicherleuchtstoffschicht 1 bewegt. Die obigen Ausführungen gelten selbstverständlich aber auch dann, wenn der Scanner 10 ortsfest ist und die auf der Trägerschicht 2 befindliche Speicherleuchtstoffschicht 1 in Bewegungsrichtung P relativ zu diesem transportiert wird. Dasselbe gilt analog für Ausgestaltungen, bei denen sowohl der Scanner 10 in Vorschubrichtung V als auch die Speicherleuchtstoffschicht 1 in Bewegungsrichtung P bewegt werden.

Während der Scanner 10 in Vorschubrichtung V relativ zur Speicherleuchtstoffschicht 1 bewegt wird, überstreicht die Stimulationslichtlinie 13 einzelne Bereiche 15 der Speicherleuchtstoffschicht 1 und regt diese nacheinander zur Aussendung von Emissionslicht 7 an, welches vom Detektor 9 für jeden der einzelnen Bereiche 15 erfasst wird.

Der Detektor 9 benötigt für die Bewegung um die Breite eines Bereichs 15 eine Vorschubdauer T_{V}. Im Verlauf dieser Bewegung erfassen die lichtempfindlichen Flächen 14 des Detektors 15 während einer Integrationsdauer T_{I} das von dem Bereich 15 ausgesandte Emissionslicht 7.

Die Breite der Bereiche 15 in Vorschubrichtung V liegt typischerweise zwischen etwa 10 µm und 500 µm. Die Querausdehnung der lichtempfindlichen Flächen 14 des Detektors 9 senkrecht zur Richtung der Detektorzeile liegt typischerweise zwischen etwa 10 µm und 600 µm.

Vorzugsweise ist die Querausdehnung der lichtempfindlichen Flächen 14 größer als die Breite der Bereiche 15 in Vorschubrichtung V. Beispielsweise liegt die Breite der Bereiche 15 bei etwa 50 µm, während die Querausdehnung der lichtempfindlichen Flächen 14 bei etwa 400 µm liegt. Die Breite eines einzelnen Bereichs 15 in Vorschubrichtung V ist in diesem Fall durch die Breite des Abschnitts der Speicherleuchtstoffschicht 1 gegeben, den die Stimulationslichtlinie 13 während ihres Vorschubs in Vorschubrichtung V innerhalb der Vorschubdauer T_{V} zur Aussendung von Emissionslicht 7 anregt. Die Ortsauflösung in Vorschubrichtung V, d.h. die kleinstmögliche Breite eines einzelnen Bereichs 15, wird hierbei durch die Breite des Fokusbereichs der Stimulationslichtlinie 13 in Vorschubrichtung V bestimmt.

Zur besseren Veranschaulichung sind die Bereiche 15 der Speicherleuchtstoffschicht 1 und die lichtempfindlichen Flächen 14 des Detektors 9 in Fig. 1 jeweils stark vergrößert und nicht maßstabsgetreu dargestellt.

Vorteilhafterweise ist die Integrationsdauer T_{I} kürzer als die Vorschubdauer T_{V}, d.h. T_{I} < T_{V}. Dadurch wird das thermisch generierte Dunkelrauschen gegenüber aus dem Stand der Technik bekannten Verfahren vermindert und damit insgesamt das Signal/Rausch-Verhältnis verbessert. Da der Detektor 9 bei der Erfassung des Emissionslichts 7 während der Integrationsdauer T_{I} nur einen Teil der Breite des Bereichs 15 überstreicht, werden darüber hinaus Informationsverluste, die durch die sog. Bewegungsunschärfe verursacht werden, vermindert.

Fig. 2 zeigt ein Beispiel für eine auszulesende Speicherleuchtstoffschicht 1 in Draufsicht. Auch in der hier gewählten Darstellung sind - wie bei Fig. 1 - die einzelnen Bereiche 15 der Speicherleuchtstoffschicht 1 aus Gründen einer besseren Anschaulichkeit stark vergrößert dargestellt.

Auf der Speicherleuchtstoffschicht 1 ist eine Stimulationslichtlinie 13 eingezeichnet, welche mit der Lichtquelle 4 und dem Detektor 9 einschließlich Abbildungseinrichtung 8 und Filter 11 (siehe Fig. 1) in Vorschubrichtung V relativ zur Speicherleuchtstoffschicht 1 bewegt wird und dabei die einzelnen Bereiche 15 überstreicht. Für den Vorschub um die Breite eines Bereichs 15 benötigt der Detektor 9 bzw. die Stimulationslichtlinie 13 eine bestimmte Vorschubdauer Tᵥ, welche - im Falle einer konstanten Relativgeschwindigkeit - dem Quotienten aus der Breite Bᵥ der einzelnen Bereiche 15 und der Relativgeschwindigkeit entspricht.

Die Lichtquelle 4 ist in der Weise gesteuert, dass lediglich jeweils ein erster Teilbereich 16 der Bereiche 15 direkt mit Stimulationslicht bestrahlt wird, wohingegen ein zweiter Teilbereich 17 der Bereiche 15 nicht direkt mit Stimulationslicht bestrahlt wird. Die Lichtquelle 4 sendet hierbei nur dann Stimulationslicht aus, wenn die Stimulationslichtlinie 13 den ersten Teilbereich 16 überstreicht. Anschließend wird die Lichtquelle 4 ausgeschaltet, so dass eine nunmehr "virtuelle Stimulationslichtlinie" den zweiten Teilbereich 17 überstreicht, ohne diesen mit Stimulationslicht zu bestrahlen. Dementsprechend wird lediglich der erste Teilbereich 16 durch direkte Bestrahlung mit Stimulationslicht zur Aussendung von Emissionslicht angeregt. Der zweite Teilbereich 17 dagegen wird durch das auf den ersten Teilbereich 16 treffende und in der Speicherleuchtstoffschicht 1 teilweise in Vorschubrichtung V gestreute Stimulationslicht zur Aussendung von Emissionslicht angeregt.

Die Steuerung der Lichtquelle 4 erfolgt hierbei durch Vorgabe einer Stimulationsdauer T_{S}, während der die Lichtquelle 4 bei der Bewegung der Stimulationslichtlinie 13 über einen Bereich 15 eingeschaltet ist. Die Lichtquelle 4 bleibt nach Ablauf der Stimulationsdauer T_{S} dann solange ausgeschaltet, bis die Stimulationslichtlinie 13 einen als nächstes auszulesenden Bereich 15 erreicht hat, bei welchem der beschriebene Bestrahlungszyklus durch Einschalten der Lichtquelle 4 von Neuem beginnen kann.

Die von der Ausdehnung der lichtempfindlichen Flächen 14 des Detektors 9 sowie von der Abbildungseinrichtung 8 abhängende Apertur des Detektors 9 überstreicht dabei ebenfalls die einzelnen angeregten Bereiche 15 der Speicherleuchtstoffschicht 1 nacheinander. Die in einer Zeile angeordneten lichtempfindlichen Flächen 14 des Detektors 9 erfassen dabei das von den zeilenförmigen Bereichen 15 jeweils ausgesandte Emissionslicht 7.

Der Detektor 9 ist dabei in der Weise gesteuert, dass dieser nur während einer Integrationsdauer T_{I} das vom Bereich 15 ausgesandte Emissionslicht 7 erfasst. Die Integrationsdauer T_{I} ist hierbei kürzer als die Vorschubdauer T_{V}, welche der Detektor 9 bzw. die Lichtquelle 4 benötigt, um eine der Breite B_{V} der Bereiche 15 entsprechende Wegstrecke in Vorschubrichtung V zurückzulegen. Die Integrationsdauer T_{I} ist vorzugsweise mit der Stimulationsdauer T_{S} synchronisiert, d.h. diese beginnen zu demselben Zeitpunkt und haben dieselbe Dauer.

Gegenüber den aus dem Stand der Technik bekannten Verfahren, bei welchen die Integrationsdauer mit der Vorschubdauer identisch ist, führt die hier beschriebene Verkürzung der Integrationsdauer gegenüber der Vorschubdauer zu einem deutlich reduzierten Dunkelrauschen. Da die Apertur des Detektors 9 bei der Erfassung des Emissionslichts während der kürzeren Integrationsdauer folglich einen in Vorschubrichtung V schmaleren Abschnitt des Bereichs 15 überstreicht, wird gleichzeitig die Bewegungsunschärfe und damit ein daraus resultierender Informationsverlust beim Auslesen vermindert.

Wie in Fig. 2 außerdem zu erkennen ist, sind die einzelnen Bereiche 15 jeweils in eine Vielzahl einzelner Bildpunkte 18 unterteilt. Diese Unterteilung wird durch die Erfassung des von den zeilenförmigen Bereichen 15 ausgesandten Emissionslichts mit einem zeilenförmig ausgebildeten Detektor 9 erreicht, wobei die Breite B_{z} der Bildpunkte 18 der Ausdehnung der einzelnen lichtempfindlichen Detektorelemente 14 in Zeilenrichtung des Detektors 9 entspricht. Die Breite B_{z} der Bildpunkte 18 liegt typischerweise zwischen etwa 10 µm und 500 µm, vorzugsweise bei etwa 50 µm.

Das von den einzelnen Bildpunkten 18 ausgesandte und von den entsprechenden lichtempfindlichen Flächen 14 des Detektors 9 zeilenweise erfasste Emissionslicht 7 wird im Detektor 9 in entsprechende Detektorsignale umgewandelt, welche die Bildinformationen des ausgelesenen latenten Röntgenbildes repräsentieren.

Das Auslesen der Speicherleuchtstoffschicht 1 wird vorzugsweise durch ein Pulssignal gesteuert. Das Pulssignal weist einen periodischen Verlauf einzelner Rechteckpulse auf, deren Pulsdauer der Stimulationsdauer T_{S} bzw. der Integrationsdauer T_{I} entspricht. Der zeitliche Abstand zwischen den aufsteigenden Flanken zweier aufeinander folgender Pulse entspricht hierbei der Vorschubdauer T_{V}. Bei dem periodischen Pulssignal dieses Beispiels entspricht die Vorschubdauer T_{V} somit der Periodendauer des Pulssignals.

Vorzugsweise sind, wie bereits erläutert, Stimulationsdauer T_{S} und Integrationsdauer T_{I} identisch, d.h. die Anregung und Erfassung des Emissionslichts erfolgen synchron. Alternativ ist es aber auch möglich, den Auslesevorgang mit zwei verschiedenen Pulssignalen zu steuern, die sich in der Dauer der Pulse (d.h. die Stimulationsdauer T_{S} ist dann von der Integrationsdauer T_{I} verschieden) und/oder der Phasenlage der Pulse relativ zueinander (d.h. die Stimulationsdauer T_{S} beginnt zu einem anderen Zeitpunkt als die Integrationsdauer T_{I}) unterscheiden.

Bei dieser Variante des Scanners 10 wird zumindest ein Teil der Scanparameter des Scanners 10 beim Auslesen in Abhängigkeit von der Dicke d der auszulesenden Speicherleuchtstoffschicht 1 gewählt oder von einer Auslesesteuerung (nicht dargestellt) eingestellt. Alternativ oder zusätzlich kann zumindest ein Teil der Scanparameter in Abhängigkeit von dem Körperteil, dessen Röntgenaufnahme in der auszulesenden Speicherleuchtstoffschicht gespeichert ist, eingestellt werden.

Als Scanparameter sind hierbei vorzugsweise einer oder mehrere der folgenden, vorstehend bereits näher beschriebenen Parameter zu verstehen:
- die Größe, d.h. die Breite B_{Z} bzw. B_{V}, der Bildpunkte 18 des ausgelesenen Röntgenbildes;
- die Stimulationsdauer T_{S} bzw. die Pulsdauer der Stimulationslichtpulse;
- die Intensität des Stimulationslichts 3;
- die Breite des Fokusbereichs 13 des Stimulationslichts 3 auf der Speicherleuchtstoffschicht 1;
- die Integrationsdauer T_{I} des Detektors 9;
- die Vorschubdauer T_{V} des Detektors 9 bzw. die Relativgeschwindigkeit, mit welcher der Scanner 10 und die Speicherleuchtstoffschicht 1 während des Auslesens relativ zueinander bewegt werden.

Das Auslesen einer Speicherleuchtstoffschicht 1 mit einer ersten Dicke d erfolgt hierbei mit anderen Scanparametern als das Auslesen einer Speicherleuchtstoffschicht 1 mit einer zweiten Dicke d, welche größer ist als die erste Dicke d.

Alternativ oder zusätzlich erfolgt das Auslesen einer Speicherleuchtstoffschicht 1, in welcher eine Röntgenaufnahme eines ersten Körperteils, wie z.B. einer Extremität oder eines Schädels, gespeichert ist, mit anderen Scanparametern als das Auslesen einer Speicherleuchtstoffschicht 1, in welcher eine Röntgenaufnahme eines zweiten Körperteils, wie z.B. einer Wirbelsäule, eines Thorax, Abdomens oder Beckens, gespeichert ist.

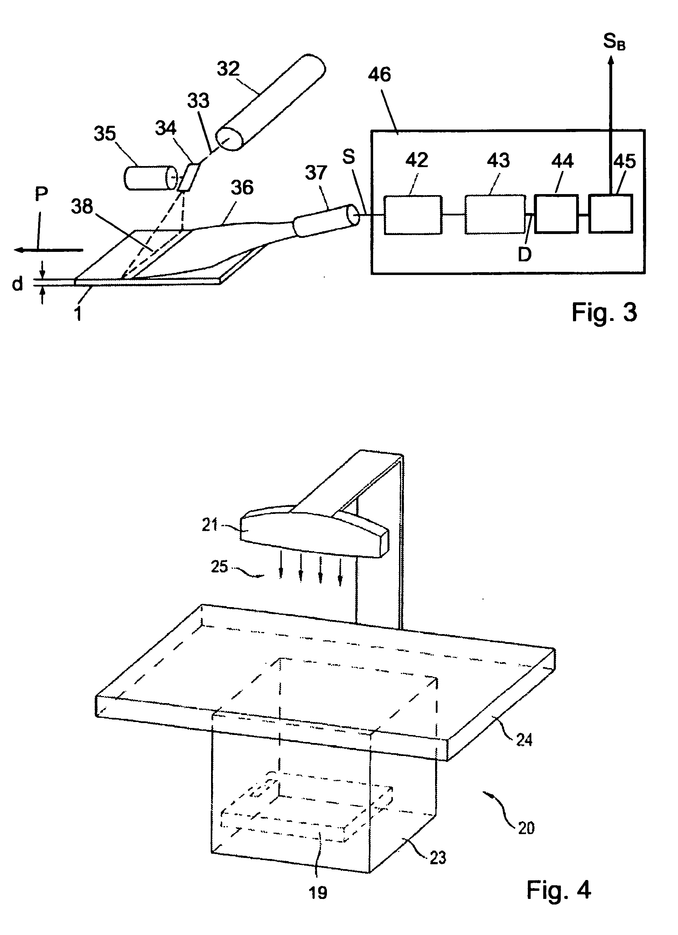

Fig. 3 zeigt eine zweite Variante einer Auslesevorrichtung zum Auslesen einer Speicherleuchtstoffschicht 1. Durch einen Laser 32 wird ein Stimulationslichtstrahl 33 erzeugt, welcher durch ein von einem Motor 35 in Rotation versetztes Ablenkelement 34 derart abgelenkt wird, dass sich dieser entlang einer Zeile 38 über die auszulesende Speicherleuchtstoffschicht 1 bewegt. Das Ablenkelement 34 ist vorzugsweise als Spiegel, insbesondere als Polygonspiegel oder Galvanometerspiegel, ausgebildet.

Während der Bewegung des Stimulationslichtstrahls 33 entlang der Zeile 38 sendet die Speicherleuchtstoffschicht 1 in Abhängigkeit der darin gespeicherten Röntgeninformation Emissionslicht aus, welches von einer optischen Sammeleinrichtung 36, beispielsweise einem Lichtleiterbündel, gesammelt, weitergeleitet und von einem an die Sammeleinrichtung 36 gekoppelten optischen Detektor 37, vorzugsweise einem Photomultiplier, erfasst und in ein entsprechendes analoges Detektorsignal S umgewandelt wird.

Das Detektorsignal S wird einer Verarbeitungseinrichtung 46 zugeführt, in welcher Bildsignalwerte S_{B} für einzelne Bildpunkte des ausgelesenen Röntgenbildes abgeleitet werden. Durch einen Transport der Speicherleuchtstoffschicht 1 in Transportrichtung P wird ein sukzessives Auslesen einzelner Zeilen 38 erreicht und damit ein zweidimensionales, aus einzelnen Bildpunkten mit jeweils einem zugehörigen Bildsignalwert S_{B} bestehendes Röntgenbild erhalten. Beträgt die Anzahl der in Transportrichtung V ausgelesenen Zeilen 38 beispielsweise 1500, so werden mit beispielsweise jeweils 1000 Bildpunkten pro Zeile 38 für das ausgelesene Röntgenbild insgesamt 1500 x 1000 Bildpunkte mit jeweils einem zugehörigen Bildsignalwert S_{B} erhalten.

Das analoge Detektorsignal S wird in dem hier dargestellten Ausführungsbeispiel zunächst durch ein Tiefpassfilter 42 gefiltert, wobei höherfrequente Anteile des Detektorsignals S, insbesondere Rauschanteile, eliminiert oder zumindest reduziert werden. Das gefilterte, analoge Detektorsignal S wird einer Digitalisierungseinrichtung 43 zugeführt und dort mit einer vorgegebenen Abtastfrequenz abgetastet und digitalisiert, wobei pro Abtastvorgang ein digitaler Detektorsignalwert D in digitalen Einheiten erhalten wird. Die Abtastfrequenz, welche auch als Samplingrate bezeichnet wird, liegt typischerweise zwischen 1 und 12 MHz.

Das Abtasten des analogen Detektorsignals S in der Digitalisierungseinrichtung 43 erfolgt vorzugsweise nach dem sog. Sample and Hold-Prinzip, bei welchem die jeweils aktuelle analoge Signalhöhe des zu einem Abtastzeitpunkt an der Digitalisierungseinrichtung 43 anliegenden Detektorsignals S gehalten und in einen entsprechenden digitalen Detektorsignalwert D umgewandelt wird.

Aus den in einem Speicher 44 zwischengespeicherten digitalen Detektorsignalwerten D werden schließlich in einer Recheneinheit 45 die einzelnen Bildsignalwerte S_{B} ermittelt, indem z.B. zwei oder mehrere Detektorsignalwerte D zu einem Bildpunkt zusammengefasst werden und daraus - beispielsweise durch Mittelwertbildung - ein zu diesem Bildpunkt gehörender Bildsignalwert S_{B} berechnet wird.

Die Abtastfrequenz ist vorzugsweise so gewählt, dass für jeden einzelnen Bildpunkt entlang der Zeile 38 mindestens zwei digitale Detektorsignalwerte D erhalten werden, aus welchen ein jeweils zu einem Bildpunkt gehörender Bildsignalwert S_{B} errechnet werden kann.

Auch bei dieser Variante der erfindungsgemäßen Auslesevorrichtung wird zumindest ein Teil der Scanparameter in Abhängigkeit von der Dicke d der auszulesenden Speicherleuchtstoffschicht 1 gewählt oder von einer Auslesesteuerung (nicht dargestellt) eingestellt. Alternativ oder zusätzlich kann zumindest ein Teil der Scanparameter in Abhängigkeit von dem Körperteil, dessen Röntgenaufnahme in der auszulesenden Speicherleuchtstoffschicht gespeichert ist, eingestellt werden.

Als Scanparameter sind hierbei vorzugsweise einer oder mehrere der folgenden, vorstehend bereits beschriebenen Parameter zu verstehen:
- die Größe der Bildpunkte des ausgelesenen Röntgenbildes;
- die Intensität des Stimulationslichts 33;
- die Breite des Fokusbereichs, d.h. der Zeile 38 des Stimulationslichts 33 auf der Speicherleuchtstoffschicht 1;
- die Abtastfrequenz oder Samplingrate beim Abtasten des analogen Detektorsignals S; und
- die Relativgeschwindigkeit, mit welcher die Speicherleuchtstoffschicht 1 während des Auslesens relativ zur Zeile 38 des Stimulationslichts bewegt wird.
   Das Auslesen einer Speicherleuchtstoffschicht 1 mit einer ersten Dicke d erfolgt hierbei mit anderen Scanparametern als das Auslesen einer Speicherleuchtstoffschicht 1 mit einer zweiten Dicke d, welche größer ist als die erste Dicke d.

Alternativ oder zusätzlich erfolgt das Auslesen einer Speicherleuchtstoffschicht 1, in welcher eine Röntgenaufnahme eines ersten Körperteils, wie z.B. einer Extremität oder eines Schädels, gespeichert ist, mit anderen Scanparametern als das Auslesen einer Speicherleuchtstoffschicht 1, in welcher eine Röntgenaufnahme eines zweiten Körperteils, wie z.B. einer Wirbelsäule, eines Thorax, Abdomens oder Beckens, gespeichert ist.

Figur 4 zeigt ein Beispiel für ein Radiographiesystem zur Aufzeichnung von Röntgenaufnahmen auf Speicherleuchtstoffschichten. In diesem Beispiel befindet sich eine - in der gewählten Darstellung nicht sichtbare - Speicherleuchtstoffschicht (wie z.B. in den Figuren 1 bis 3 dargestellt) in einer Röntgenkassette 19, welche in einem Röntgentisch 20 eingesetzt ist. Der Röntgentisch 20 umfasst einen Röntgenfuß 23, in dem sich die Röntgenkassette 19 befindet, und eine auf dem Röntgenfuß 23 angebrachte Auflagefläche 24, auf welche bei Röntgenaufnahmen Patienten oder deren Extremitäten gelegt werden können. Über der Auflagefläche 24 ist eine Röntgenstrahlungsquelle 21 angeordnet, welche Röntgenstrahlung 25 mit unterschiedlicher Energie und Intensität in Richtung auf die Auflagefläche 24 aussenden kann.

Die Grenzenergie der bei der Röntgenaufnahme verwendeten Röntgenstrahlung wird abhängig von der jeweiligen Dicke d (siehe Fig. 1 oder 3) der verwendeten Speicherleuchtstoffschicht gewählt bzw. von einer Aufzeichnungssteuerung (nicht dargestellt) entsprechend eingestellt. Hierbei wird bei einer Röntgenaufnahme unter Verwendung einer Speicherleuchtstoffschicht mit einer ersten Dicke eine erste Grenzenergie der Röntgenstrahlung eingestellt. Bei einer Röntgenaufnahme unter Verwendung einer Speicherleuchtstoffschicht mit einer zweiten Dicke, die größer ist als die erste Dicke, wird eine zweite Grenzenergie der Röntgenstrahlung eingestellt, welche größer ist als die erste Grenzenergie.

Unter der Grenzenergie der Röntgenstrahlung ist hierbei die maximale Energie der jeweiligen Röntgenphotonen zu verstehen. Der Wert der jeweiligen Grenzenergie der Röntgenphotonen, z.B. 50 keV, entspricht hierbei dem Wert der in der Röntgenröhre, in welcher die Röntgenstrahlung erzeugt wird, eingestellten Hochspannung, im genannten Beispiel also 50 kV.

Durch die Steuerung des Radiographiesystems in Abhängigkeit von der Dicke der bei der Aufzeichnung verwendeten Speicherleuchtstoffschicht wird eine verbesserte Anpassung der Aufzeichnungsbedingungen sowie der Dicke der Speicherleuchtstoffschicht an die jeweilige medizinische Anwendung, die auch Applikation genannt wird, erreicht. Auf diese Weise kann für unterschiedliche Applikationen eine jeweils optimale Bildqualität erzielt werden. Unterschiedliche Applikationen sind z.B. Röntgenaufnahmen von Extremitäten, des Schädels, der Wirbelsäule, des Thorax, des Abdomens oder des Beckens.

Vorzugsweise liegt die erste Grenzenergie der Röntgenstrahlung des Radiographiesystems im Bereich zwischen 40 und 70 keV. Bei diesen Energien wird in der ersten Speicherleuchtstoffschicht ein Röntgenbild gespeichert, welches beim Auslesen trotz der geringeren Dicke der Speicherleuchtstoffschicht eine relativ hohe Intensität des Emissionslichts und somit ein hohes Signal/Rausch-Verhältnis zu Folge hat.

Die zweite Grenzenergie der Röntgenstrahlung des Radiographiesystems liegt vorzugsweise im Bereich zwischen 70 und 150 keV. Bei diesen Energien wird in der zweiten Speicherleuchtstoffschicht ein Röntgenbild gespeichert, welches beim Auslesen wegen der größeren Dicke der Speicherleuchtstoffschicht eine ebenfalls relativ hohe Intensität des Emissionslichts und somit ein hohes Signal/Rausch-Verhältnis zu Folge hat.

Vorzugsweise ist die Intensität der Röntgenstrahlung bei einer Röntgenaufnahme unter Verwendung einer Speicherleuchtstoffschicht mit einer ersten Dicke größer als bei als bei einer Röntgenaufnahme unter Verwendung einer Speicherleuchtstoffschicht mit einer zweiten Dicke, die größer ist als die erste Dicke. Hierdurch wird eine noch bessere Anpassung der bei der jeweiligen Applikation erforderlichen Bildqualität der aufgezeichneten Röntgenaufnahme erreicht.

## Patentansprüche

1. Auslesevorrichtung zum Auslesen von in Speicherleuchtstoffschichten gespeicherten Röntgenaufnahmen mit einer Bestrahlungseinrichtung (4 - 6, 32 - 35) zur Bestrahlung einer Speicherleuchtstoffschicht (1) mit Stimulations-licht (3, 33), welches die Speicherleuchtstoffschicht (1) zur Aussendung von Emissionslicht (7) anregen kann, einem Detektor (9, 37) zur Erfassung von in der Speicherleuchtstoffschicht (1) angeregtem Emissionslicht (7) und einer Auslesesteuerung zur Steuerung der Auslesevorrichtung (10, 32 - 37) derart, dass
- eine erste Speicherleuchtstoffschicht (1), die eine erste Dicke (d) aufweist, von der in einem ersten Auslesemodus gesteuerten Auslesevorrichtung (10, 32 - 37) ausgelesen wird und
- eine zweite Speicherleuchtstoffschicht (1), die eine zweite Dicke (d) aufweist, die größer ist als die erste Dicke (d), von der in einem zweiten Auslesemodus gesteuerten Auslesevorrichtung (10, 32 - 37) ausgelesen wird, wobei der zweite Auslesemodus von dem ersten Auslesemodus verschieden ist,
**dadurch gekennzeichnet, dass**
- die Auslesevorrichtung (10, 32 - 37) derart ausgebildet ist, dass beim Auslesen einer Speicherleucht-stoffschicht (1) ein aus einer Vielzahl von Bildpunkten (18) zusammengesetztes Bild etezeugt wird wobei die Größe (B_{z}, Bᵥ) der Bildpunkte (18) im ersten Auslesemodus kleiner ist als im zweiten Auslesemodus, und/oder
- die Bestrahlungseinrichtung (4 - 6, 32 - 35) durch die Auslesesteuerung derart gesteuert wird, dass die Bestrahlungseinrichtung (4 - 6, 32 - 35) Stimulationslichtpulse mit einer bestimmten Pulsdauer (Tₛ) aussendet, wobei die Pulsdauer (Tₛ) der Stimulationslichtpulse im ersten Auslesemodus kürzer ist als im zweiten Auslesemodus, und/oder
- die Bestrahlungseinrichtung (4 - 6, 32 - 35) durch die Auslesesteuerung derart gesteuert wird, dass die Intensität des Stimulationslichts (3, 33) im ersten Auslesemodus kleiner ist als die Intensität des Stimulationslichts (3, 33) im zweiten Auslesemodus, und/oder
- die Auslesevorrichtung (10, 32 - 37) eine Fokussiereinrichtung (6) zur Fokussierung des Stimulationslichts (3, 33) auf die Speicherleuchtstoffschicht (1) aufweist, wobei das Stimulationslicht (3, 33) in einem, insbesondere linienförmigen, Fokusbereich (13, 38) auf die Speicherleuchtstoffschicht (1) trifft und die Breite des Fokusbereichs (13, 38) im ersten Auslesemodus kleiner ist als im zweiten Auslesemodus, und/oder
- der Detektor (9, 37) und die Speicherleuchtstoffschicht (1) so eingerichtet sind, dass sie relativ zueinander bewegt werden können und der Detektor (9, 37) durch die Auslesesteuerung derart gesteuert wird, dass das Emissionslicht (7) in einer Vielzahl von Zeitintervallen (T₁) während der Relativbewegung erfasst wird, wobei die Zeitintervalle (T₁) im ersten Auslesemodus kürzer sind als im zweiten Auslesemodus.

2. Auslesevorrichtung nach Anspruch 1, wobei der Detektor (9, 37) und die Speicherleuchtstoffschicht (1) mit einer Relativgeschwindigkeit relativ zueinander bewegt werden können, wobei die Relativgeschwindigkeit im ersten Auslesemodus kleiner ist als im zweiten Auslesemodus.

3. Auslesevorrichtung nach einem der vorangehenden Ansprüche, wobei die erste Dicke (d) der ersten Speicherleuchtstoffschicht (1) zwischen 100 und 750 µm liegt.

4. Auslesevorrichtung nach einem der vorangehenden Ansprüche, wobei die zweite Dicke (d) der zweiten Speicherleuchtstoffschicht (1) zwischen 750 und 1000 µm liegt.

5. Auslesevorrichtung nach einem der vorangehenden Ansprüche, wobei die erste und/oder zweite Speicherleuchtstoffschicht (1) nadelförmige Speicherleuchtstoffstrukturen aufweist.

6. Verfahren zum Auslesen von in Speicherleuchtstoffschichten gespeicherten Röntgenaufnahmen, wobei
- eine erste Speicherteuchtstoffschicht (1), die eine erste Dicke (d) aufweist, von einer in einem ersten Auslesemodus gesteuerten Auslesevorrichtung (10, 32 - 37) ausgelesen wird und
- eine zweite Speicherleuchtstoffschicht (1), die eine zweite Dicke (d) aufweist, die größer ist als die erste Dicke (d), von der in einem zweiten Auslesemodus gesteuerten Auslesevorrichtung (10, 32 - 37) ausgelesen wird, wobei der zweite Auslesemodus von dem ersten Auslesemodus verschieden ist,
**dadurch gekennzeichnet, dass**
- ein aus einer Vielzahl von Bildpunkten (18) zusammengesetztes Bild erzeugt wird, wobei die Größe (B_{z}, Bᵥ) der Bildpunkte (18) im ersten Auslesemodus kleiner ist als im zweiten Auslesemodus, und/oder
- die Bestrahlungseinrichtung (4 - 6, 32 - 35) Stimulationslichtpulse mit einer bestimmten Pulsdauer (Tₛ) aussendet, wobei die Pulsdauer (Tₛ) der Stimulationslichtpulse im ersten Auslesemodus kürzer ist als im zweiten Auslesemodus, und/oder
- die Intensität des Stimulationslichts (3, 33) im ersten Auslesemodus kleiner ist als die Intensität des Stimulationslichts (3, 33) im zweiten Auslesemodus, und/oder
- das Stimulationslicht (3, 33) in einem, insbesondere linienförmigen, Fokusbereich (13, 38) auf die Speicherleuchtstoffschicht (1) trifft und die Breite des Fokusbereichs (13, 38) im ersten Auslesemodus kleiner ist als im zweiten Auslesemodus, und/oder
- ein Detektor (9, 37) und die Speicheneuchtstoffschicht (1) relativ zueinander bewegt werden, wobei der Detektor (9, 37) während der Relativbewegung in der Speicherleuchtstoffschicht (1) angeregtes Emissionslicht (7) in einer Velzahl von Zeitintervallen (T_{I}) erfasst, wobei die Zeitintervalle (T_{I}) im ersten Auslesemodus kürzer sind als im zweiten Auslesemodus.

## Claims

1. A read-out apparatus for reading out X-ray photographs stored in storage phosphor layers comprising an irradiation device (4-6, 32-35) for irradiating a storage phosphor layer (1) with stimulation light (3, 33) which can stimulate the storage phosphor layer (1) to emit emission light (7), a detector (9, 37) for detecting emission light (7) stimulated in the storage phosphor layer (1), and a read-out control for controlling the read-out apparatus (10, 32-37) such that
- a first storage phosphor layer (1), which has a first thickness (d), is read out by the read-out apparatus (10, 32-37) controlled in a first read-out mode, and
- a second storage phosphor layer (1), which has a second thickness (d) which is greater than the first thickness (d), is read out by the read-out apparatus (10, 32-37) controlled in a second read-out mode, the second read-out mode being different from the first read-out mode,
**characterised in that**
- the read-out apparatus (10, 32-37) is designed such that when reading out a storage phosphor layer (1) an image made up of a plurality of pixels (18) is generated, the size (B_{z}, Bᵥ) of the pixels (18) being smaller in the first read-out mode than in the second read-out mode, and/or
- the irradiation device (4-6, 32-35) is controlled by the read-out control such that the irradiation device (4-6, 32-35) emits stimulation light pulses with a specific pulse duration (Tₛ), the pulse duration (Tₛ) of the stimulation pulses being shorter in the first read-out mode than in the second read-out mode, and/or
- the irradiation device (4-6, 32-35) is controlled by the read-out control such that the intensity of the stimulation light (3, 33) in the first read-out mode is less than the intensity of the stimulation light (3, 33) in the second read-out mode, and/or
- the read-out apparatus (10, 32-37) has a focussing device (6) for focussing the stimulation light (3, 33) onto the storage phosphor layer (1), the stimulation light striking the storage phosphor layer (1) in a focus region (13, 38) which is in particular linear, and the width of the focus range (13, 38) in the first read-out mode is smaller than in the second read-out mode, and/or
- the detector (9, 37) and the storage phosphor layer (1) are set up such that they can be moved relative to one another and the detector (9, 37) is controlled by the read-out control such that the emission light (7) is detected in a plurality of time intervals (T₁) during the relative movement, the time intervals (T₁) in the first read-out mode being shorter than in the second read-out mode.

2. The read-out apparatus according to Claim 1, the detector (9, 37) and the storage phosphor layer (1) being able to be moved at a relative speed relative to one another, the relative speed in the first read-out mode being lower than in the second read-out mode.

3. The read-out apparatus according to any of the preceding claims, the first thickness (d) of the first storage phosphor layer (1) being between 100 and 750 µm.

4. The read-out apparatus according to any of the preceding claims, the second thickness (d) of the second storage phosphor layer (1) being between 750 and 1000 µm.

5. The read-out apparatus according to any of the preceding claims, the first and/or second storage phosphor layer (1) having needle-shaped storage phosphor structures.

6. A method for reading out X-ray photographs stored in storage phosphor layers,
- a first storage phosphor layer (1), which has a first thickness (d), being read out by a read-out apparatus (10, 32-37) controlled in a first read-out mode, and
- a second storage phosphor layer (1), which has a second thickness (d) which is greater than the first thickness (d), being read out by the read-out apparatus (10, 32-37) controlled in a second read-out mode, the second read-out mode being different from the first read-out mode,
**characterised in that**
- an image made up of a plurality of pixels (18) is generated, the size (B_{z}, Bᵥ) of the pixels (18) in the first read-out mode being smaller than in the second read-out mode, and/or
- the irradiation device (4-6, 32-35) emits stimulation light pulses with a specific pulse duration (Tₛ), the pulse duration (Tₛ) of the stimulation light pulses being shorter in the first read-out mode than in the second read-out mode, and/or
- the intensity of the stimulation light (3, 33) in the first read-out mode is less than the intensity of the stimulation light (3, 33) in the second read-out mode, and/or
- the stimulation light (3, 33) strikes the storage phosphor layer (1) in a focus range (13, 38) which is in particular linear, and the width of the focus range (13, 38) is smaller in the first read-out mode than in the second read-out mode, and/or
- a detector (9, 37) and the storage phosphor layer (1) are moved relative to one another, the detector (9, 37) detecting emission light (7) stimulated in the storage phosphor layer (1) during the relative movement in a plurality of time intervals (T₁), the time intervals (T₁) in the first read-out mode being shorter than in the second read-out mode.

## Revendications

1. Dispositif de lecture permettant de lire des radiographies enregistrées dans des couches d'enregistrement luminescentes, comportant un dispositif d'irradiation (4 - 6, 32 - 35) destiné à exposer une couche d'enregistrement luminescente (1) à de la lumière de stimulation (3, 33) qui peut stimuler la couche d'enregistrement luminescente (1) de manière à émettre de la lumière d'émission (7), un détecteur (9, 37) destiné à détecter de la lumière d'émission (7) stimulée dans la couche d'enregistrement luminescente (1) et une commande de lecture destiné à commander le dispositif de lecture (10, 32 - 37) de telle manière que
- une première couche d'enregistrement luminescente (1), présentant une première épaisseur (d), est lue par le dispositif de lecture (10, 32 - 37) commandé dans un premier mode de lecture, et
- une deuxième couche d'enregistrement luminescente (1), présentant une deuxième épaisseur (d) qui est supérieure à la première épaisseur (d), est lue par le dispositif de lecture (10, 32 - 37) commandé dans un deuxième mode de lecture, le deuxième mode de lecture étant différent du premier mode de lecture,
**caractérisé en ce que**
- le dispositif de lecture (10, 32 - 37) est conçu de telle manière que, lors de la lecture d'une couche d'enregistrement luminescente (1), une image composée d'une multitude de points d'image (18) est produite, la taille (B_{z}, Bᵥ) des points d'image (18) étant plus petite dans le premier mode de lecture que dans le deuxième mode de lecture, et/ou
- le dispositif d'irradiation (4 - 6, 32 - 35) est commandé par la commande de lecture de telle manière que le dispositif d'irradiation (4 - 6, 32 - 35) émet des impulsions de lumière de stimulation d'une durée d'impulsion (Tₛ) précise, la durée d'impulsion (Tₛ) des impulsions de lumière de stimulation étant plus courte dans le premier mode de lecture que dans le deuxième mode de lecture, et/ou
- le dispositif d'irradiation (4 - 6, 32 - 35) est commandé par la commande de lecture de telle manière que l'intensité de la lumière de stimulation (3, 33) est plus petite dans le premier mode de lecture que ne l'est l'intensité de la lumière de stimulation (3, 33) dans le deuxième mode de lecture, et/ou
- le dispositif de lecture (10, 32 - 37) présente un dispositif de focalisation (6) destiné à focaliser la lumière de stimulation (3, 33) sur la couche d'enregistrement luminescente (1), la lumière de stimulation (3, 33) parvenant sur la couche d'enregistrement luminescente (1) dans une zone de focalisation (13, 38) notamment linéaire, et la largeur de la zone de focalisation (13, 38) étant plus petite dans le premier mode de lecture que dans le deuxième mode de lecture, et/ou
- le détecteur (9, 37) et la couche d'enregistrement luminescente (1) sont agencés de telle manière qu'ils peuvent subir un déplacement l'un par rapport à l'autre et le détecteur (9, 37) est commandé par la commande de lecture de telle manière que la lumière d'émission (7) est captée lors d'une multitude d'intervalles de temps (T_{I}) au cours du déplacement relatif, l'intervalle de temps (T_{I}) étant plus court dans le premier mode de lecture que dans le deuxième mode de lecture.

2. Dispositif de lecture selon la revendication 1, dans lequel le détecteur (9, 37) et la couche d'enregistrement luminescente (1) peuvent subir un déplacement l'un par rapport à l'autre selon une vitesse relative, la vitesse relative étant plus basse dans le premier mode de lecture que dans le deuxième mode de lecture.

3. Dispositif de lecture selon l'une des revendications précédentes, dans lequel la première épaisseur (d) de la première couche d'enregistrement luminescente (1) se situe entre 100 et 750 µm.

4. Dispositif de lecture selon l'une des revendications précédentes, dans lequel la deuxième épaisseur (d) de la deuxième couche d'enregistrement luminescente (1) se situe entre 750 et 1000 µm.

5. Dispositif de lecture selon l'une des revendications précédentes, dans lequel la première et/ou la deuxième couche d'enregistrement luminescente (1) présente des structures luminescentes d'enregistrement aciculaires.

6. Procédé de lecture de radiographies enregistrées dans des couches d'enregistrement luminescentes, dans lequel
- une première couche d'enregistrement luminescente (1), présentant une première épaisseur (d), est lue par un dispositif de lecture (10, 32 - 37) commandé dans un premier mode de lecture, et
- une deuxième couche d'enregistrement luminescente (1), présentant une deuxième épaisseur (d), qui est supérieure à la première épaisseur (d), est lue par le dispositif de lecture (10, 32 - 37) commandé dans un deuxième mode de lecture, le deuxième mode de lecture étant différent du premier mode de lecture,
**caractérisé en ce que**
- une image composée d'une multitude de points d'image (18) est produite, la taille (B_{z}, Bᵥ) des points d'image (18) étant plus petite dans le premier mode de lecture que dans le deuxième mode de lecture, et/ou
- le dispositif d'irradiation (4 - 6, 32 - 35) émet des impulsions de lumière de stimulation d'une durée d'impulsion (T_{S}) précise, la durée d'impulsion (T_{S}) des impulsions de lumière de stimulation étant plus courte dans le premier mode de lecture que dans le deuxième mode de lecture,
- l'intensité de la lumière de stimulation (3, 33) est plus petite dans le premier mode de lecture que ne l'est l'intensité de la lumière de stimulation (3, 33) dans le deuxième mode de lecture, et/ou
- la lumière de stimulation (3, 33) parvient sur la couche d'enregistrement luminescente (1) dans une zone de focalisation (13, 38) notamment linéaire, et la largeur de la zone de focalisation (13, 38) est plus petite dans le premier mode de lecture que dans le deuxième mode de lecture, et/ou
- un détecteur (9, 37) et la couche d'enregistrement luminescente (1) peuvent subir un déplacement l'un par rapport à l'autre, le détecteur (9, 37) captant, au cours du déplacement relatif, la lumière d'émission (7) stimulée dans la couche d'enregistrement luminescente (1) lors d'une multitude d'intervalles de temps (T_{I}), l'intervalle de temps (T_{I}) étant plus court dans le premier mode de lecture que dans le deuxième mode de lecture.
